# EUROPÄISCHE PATENTANMELDUNG

(11) **EP 2 910 299 A1**
(43) Veröffentlichungstag der Anmeldung: **26.08.2015**
(21) Anmeldenummer: 15000417.4
(22) Anmeldetag: 12.02.2015
(51) Int. Cl.: B01D 63/08, B01D 69/06, B01D 69/10, B01D 71/02

(54) **Platten- oder scheibenartige Filtereinrichtung**

(30) Priorität: 19.02.2014 DE 102014002162
(71) Anmelder: KERAFOL Keramische Folien GmbH, 92676 Eschenbach/Opf. (DE)
(72) Erfinder: Koppe, Franz, 92676 Eschenbach/Opf. (DE); Münch, Christian, 95643 Tirschenreuth (DE)
(74) Vertreter: Hafner, Dieter

(57) **Zusammenfassung**

Die Erfindung betrifft eine platten- oder scheibenartige Filtervörrichtung 1, umfassend wenigstens zwei gesinterte Keramikaußenlage 2, die zwischen sich wenigstens ein Drainageelement 3 einschließen und zumindest bereichsweise unmittelbar oder mittelbar miteinander verbunden sind, wobei die gesinterten Keramikaußenlage 2 an ihrer dem Drainageelement 3 zugeordneten Innenseite 4 eben ausgebildet sind und das Drainageelement 3 damit i. w. flächig beaufschlagen sowie das Drainageelement 3 aus nicht keramischem Material besteht.

## Beschreibung

Die Erfindung/Neuerung betrifft eine platten- oder scheibenartige Filtereinrichtung, umfassend wenigstens zwei gesinterte Keramikaußenlagen, die zwischen sich wenigstens ein Drainageelement einschließen. Die Keramikaußenlagen sind zumindest bereichsweise unmittelbar oder mittelbar miteinander verbunden.

Aus US 5,730,869 geht z.B. ein poröser Keramikfilter hervor, der die Merkmale des Oberbegriffes des Anspruches 1 aufweist. Zwei gesinterte Keramikaußenlagen werden über keramische Stege und einen keramischen Außenring durch Versinterung zu einer homogenen Einheit miteinander verbunden. Dieser Vorgang ist relativ aufwendig, der so hergestellte Filter eignet sich für spezielle Anwendungsbereiche, primär für den Bereich der Mikro- und Ultrafiltration, insbesondere auch für Anwendungen in organischen Lösungsmitteln und heißen, aggressiven Prozessmedien.

Darüber hinaus ist aus DE 10 2011 107 278.4 ein poröser Keramikfilter bekannt, bei welchem angesinterte Distanzelemente aus mehreren Teilelementen bestehen, die einen sich im Wesentlichen linear in Richtung der Abflussöffnung erstreckenden Abschnitt umfassen, von dem aus eine Mehrzahl zueinander parallel angeordneter Abschnitte abzweigt. Auch ein derartiger Filter ist in seiner Herstellung relativ kompliziert und kostenaufwendig, so dass er für weniger komplexe Anwendungsbereiche aus Kostengründen nicht mehr wirtschaftlich einsetzbar ist.

Der Erfindung/Neuerung liegt die Aufgabe zugrunde, eine platten- oder scheibenartige Filtereinrichtung mit den Merkmalen des Oberbegriffes des Anspruches 1 derart auszubilden, dass sie günstiger herstellbar ist und dadurch Zugang zu weniger aufwendigen Filteraufgaben findet. Diese Aufgabe wird durch die kennzeichnenden Merkmale des Anspruches 1 gelöst, vorteilhafte Weiterbildungen ergeben sich aus den Unteransprüchen 2 - 16.

Als Kern der Erfindung wird es angesehen, eine Filtereinrichtung zu gestalten, dass die gesinterten Keramikaußenlagen auch an ihrer Innenseite glatt ausgebildet sind, das Drainageelement im Wesentlichen flächig beaufschlagen und das Drainageelement aus einem nicht keramischen Material ausgebildet ist.

Als erster Schritt einer Fertigung der Filtereinrichtung werden zunächst zwei Keramikaußenlagen hergestellt, dies kann durch einen Stanzvorgang einer Grünfolie geschehen, dann werden die Grundfolienelemente gesintert, so dass als Zwischenprodukt zwei an ihren Oberflächen eben ausgebildete Keramikaußenlagen vorliegen. Auf den Keramikaußenlagen können zusätzlich einseitig ein- oder mehrlagige Membranschichten aufgebracht werden.

Darüber hinaus wird ein Drainageelement hergestellt, das zwischen die gesinterten Keramikaußenlagen gelegt wird derart, dass die gesinterten Keramikaußenlagen mit ihrer ebenen Innenseite das Drainageelement im Wesentlichen flächig beaufschlagen. Sodann wird dieses Paket aus wenigstens drei Lagen miteinander verbunden, insbesondere durch eine randseitige Verbindung, beispielsweise durch eine Verklebung, gegebenenfalls unter Zwischenlage eines Randabschlusselementes.

Ein derartiger Filter ist aufgrund der einfachen Struktur der Filteraußenscheiben günstig herzustellen, das Drainageelement kann aus einem textilen, polymeren oder metallischen Material bestehen, es bietet sich aber auch Carbon, Papier oder Zellstoff an. Das Drainageelement kann ein Gewebe oder ein Gelege sein, kann auch aus glasartigem Material, insbesondere aus einem glasfaserigen Material ausgebildet sein. Als Drainageelement kommt auch ein Kunststöffschaum, ein Metallschaum oder ein metallisches Gitterelement in Frage. Angesprochen sind alle Materialien, die eine gewisse Durchlässigkeit oder Porosität aufweisen, um als Filterdrainagematerial dienen zu können.

Der angesprochene Aufbau einer solchen Filtereinrichtung ermöglicht eine sehr preisgünstige und schnelle Herstellung, wobei die Filtereinrichtung durch Auswahl einer geeigneten Drainagelage bei Verwendung identischer Außenscheiben an spezielle Aufgabenbereiche angepasst werden kann, ohne die eigentliche Konstruktion prinzipiell verlassen zu müssen. Das Drainageelement kann durch Schneiden, Stanzen, Pressen oder dergleichen hergestellt werden. Es ist aber auch möglich, z.B. zwischen zwei mit Distanz aneinander befestigte Keramikaußenlagen ein schaumartiges Material in den Innenbereich einzuspritzen und dort zu verfestigen. Dabei ist es von Vorteil, wenn die Keramikscheiben durch Fixier- oder Unterstützungspunkte aus Polymer- oder Keramikklebesystemen miteinander verbunden sind, um einen gewissen Innendruck beim Ausschäumen zu widerstehen. Natürlich ist es auch vorteilhaft, wenn bei Rückspülvorgängen die Keramikaußenlagen in geeigneter Weise miteinander verbunden sind, um nicht nach außen wegzuplatzen oder sich wegzuwölben. Dabei kann es sogar vorteilhaft sein, wenn die Keramikaußenlagen in ihrem Innenbereich von Zugbelastungsverbindungselementen durchsetzt sind.

Mit Vorteil ist es bei relativ großflächigen Filtereinrichtungen auch möglich, die Keramikaußenlagen aus einer Mehrzahl von Einzelsegmenten oder Einzelelementen zusammenzusetzen - je nach der äußeren Form der Filtereinrichtung - und über Verbindungselemente im Bereich ihrer Stoßkanten miteinander zu verbinden. Die Verbindungselemente können als Doppel-U-Profilleisten ausgebildet sein, wobei dann die Keramikaußenlagenstücke oder -elemente in die U-Bögen eingesteckt sind und dort miteinander verklebt werden können. Grundsätzlich ist es auch möglich, eine derartige Konstruktion nur zu stecken und über Dichtmittel dicht zu gestalten und dann über einen Außenring miteinander zu verbinden. Zugbelastungsverbindungselemente können dann im Bereich der Stoßkantenverbindungselemente vorgesehen werden. Es ist auch möglich, die Verbindungsprofile für die Stoßkanten von zwei parallelen Keramikaußenlagenlagen mit Zugentlastungsverbindungselementen einstückig auszubilden.

Filtratabfluss und Spühlöffnungen können dem Grunde nach in allen Bereichen der Vorrichtung vorgesehen werden, insbesondere auch im Innenbereich wenigstens einer der Keramikaußenlagen.

Es liegt auch im Bereich der Erfindung, flächig an der Ober- oder Unterseite der Keramikaußenlagen Filtratabführadapter anzuformen oder ansetzbar zu gestalten, beispielsweise durch geeignete Schnapp-Rast-Verbindungselemente.

Filtratabfluss- oder -Spüladapter können aber auch im Bereich der Stoßkantenverbindungselemente angeordnet werden.

Die Vorrichtung nach der Erfindung kann als Einzelscheibenfiltervorrichtung eingesetzt werden oder aber auch als stackartig aufgebaute Mehrscheibenanordnung, wie dies bereits dem Grunde nach bekannt ist.

Die Erfindung ist anhand von Ausführungsbeispielen in den Zeichnungsfiguren näher erläutert. Diese zeigen:
- Fig. 1: einen Schnitt durch eine erste Ausführungsform der erfindungsgemäßen Filtereinrichtung;
- Fig. 2: eine Sequenz eines Herstellungsprozesses einer Filtereinrichtung, bei welcher der Bereich zwischen den Keramikaußenlagen ausgeschäumt ist;

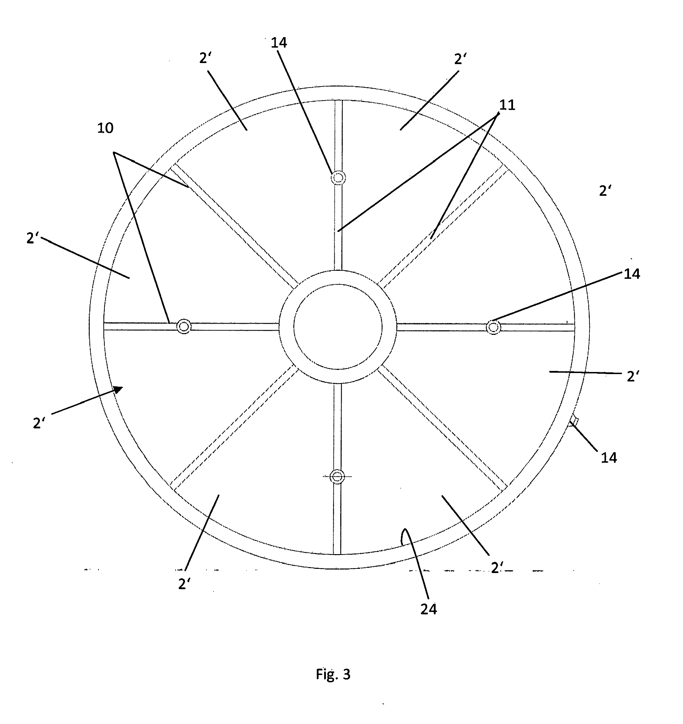

- Fig. 3: eine Ausführungsform einer Filtereinrichtung mit einer Mehrzahl von Einzelsegmenten in Steck- oder Klebebauweise;
- Fig. 4: eine Detailansicht einer Filtratabführöffnung gemäß Schnittlinie IV in Figur 3;
- Fig. 5: eine Detaildarstellung im Schnitt gemäß Element V in Figur 3.

Zunächst wird auf Zeichnungsfigur 1 Bezug genommen.

Die platten- oder scheibenartige Filtervorrichtung 1 besteht bei den dargestellten Ausführungsbeispielen aus zwei gesinterten Keramikaußenlagen 2, die jeweils an ihren beiden Oberflächen eben ausgebildet sind. Insbesondere sollen die Innenseiten 4 der Keramikaußenlagen 2 eben sein, damit sie zwischen sich flächig ein Drainageelement 3 einschließen können und dieses flächig beaufschlagen können. Das Drainageelement 3 ist erfindungsgemäß aus einem nicht keramischen Material, insbesondere aus einem textilen, polymeren oder metallischen Material oder z. B. aus Carbon, Papier oder Zellstoff gebildet. Das Drainageelement 3 kann ein Gewebe oder Gelege sein und es kann aber auch aus einem glasartigen Material, insbesondere aus Glasfasermaterial bestehen.

Die Keramikaußenlagen 2 sind durch Fixier- oder Unterstützungspunkte 5 aus Polymer- oder Keramikklebesystemen miteinander verbunden. Dadurch wird eine äquidistante Beabstandung der Keramikaußenlagen 2 insbesondere auch beim Herstellungsprozess sichergestellt.

Darüber hinaus können die Keramikaußenlagen 2 der Filtervorrichtung in ihrem Innenbereich 8, d. h. innerhalb ihrer Oberfläche von Zugbelastungselementen 6 durchsetzt sein oder durch solche aneinander derart befestigt sein, dass sie bei Beaufschlagung durch Kräfte, die auf die Innenseiten 4 der Keramikaußenlagen 2 einwirken, sich nicht voneinander wegwölben oder platzen. Dies kann z. B. bei Rückspülvorgängen der Fall sein oder bei einem Ausschäumvorgang während der Herstellung.

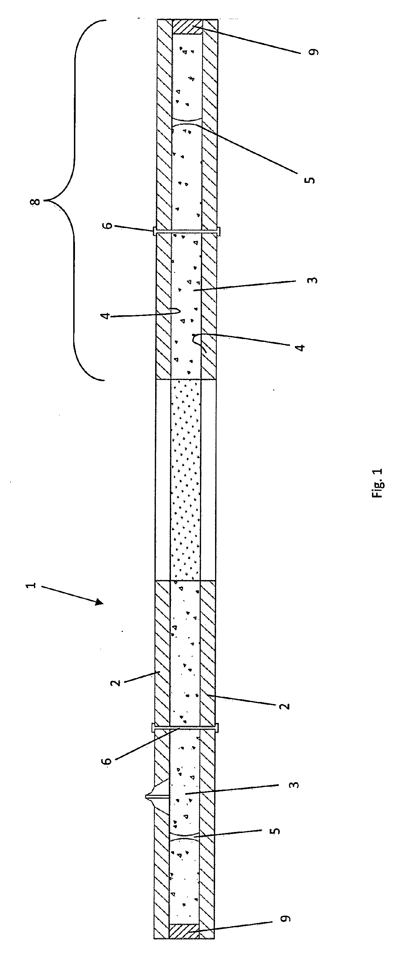

Die Keramikaußenlagen 2 sind in ihrem Randbereich 7 abgedichtet, insbesondere miteinander verklebt, wobei gegebenenfalls ein oder mehrere Randabschlusselemente 9 dazwischengelegt oder aufgesteckt werden können. In Figur 1 liegen die Randabschlusselemente, die beispielsweise bei einer runden Keramikaußenlage 2 als Kreissegmentelemente ausgebildet sind, zwischen den Keramikaußenlagen 2, sie können aber - wie in Zeichnungsfigur 2 angedeutet, auch wie ein Schuh über den Randbereich 7 der Scheiben gesteckt werden und dann verklebt werden.

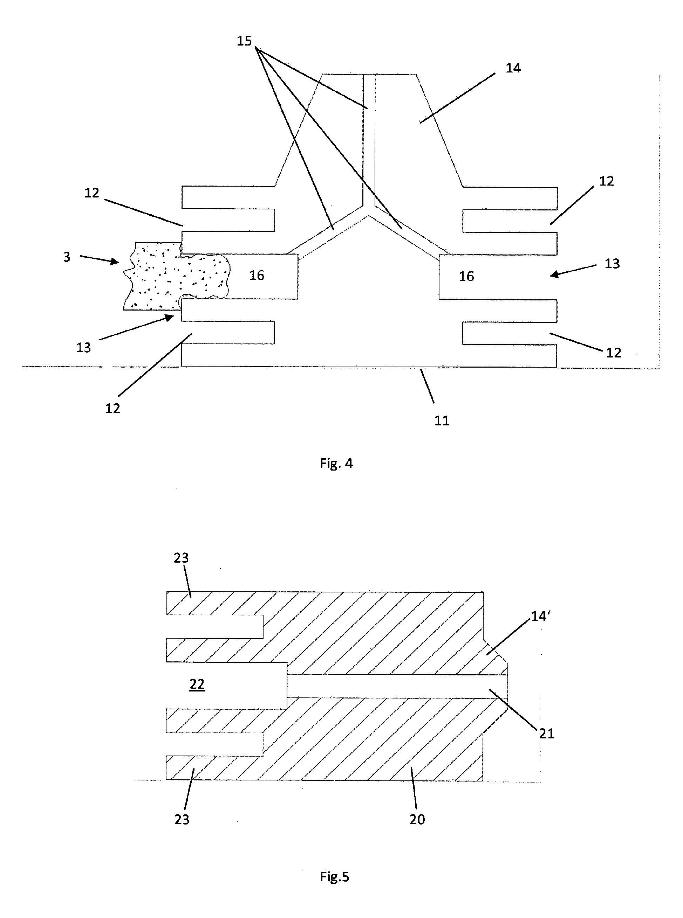

Bei dem in Zeichnungsfigur 3 dargestellten Ausführungsbeispiel bestehen die Keramikaußenlagen 2 aus einer Mehrzahl von Einzelsegmenten 2', die an ihren Stoßkanten 10 über Verbindungselemente 11 miteinander verbunden sind. In den Figuren 4 und 5 sind Schnitte durch solche Verbindungselemente dargestellt, und zwar im Bereich von Filtratabfluss- oder Zuflussadaptern.

Im Prinzip sind die Verbindungselemente 11 nach Art von wenigstens zwei U-Ausnehmungen 12 auf jeder Seite aufweisende Steckleisten ausgebildet, sodass in die durch die U-Ausnehmungen 12 gebildeten Taschen die Stoßkanten 10 der Einzelsegmente 2' eingesteckt werden können.

Zusätzlich ist in Figur 4 dargestellt, dass ein Filtratabfluss- oder Zuflussadapter 14 an ein Verbindungselemeht 11 angeformt ist, ein Filtratkanal 15 verzweigt sich in Kanalabschnitte 15' und geht in den Inhehbereich 16 des Verbindungselementes 11 über, der an das Drainageelement 3 angrenzt.

Figur 5 zeigt einen Schnitt durch eine Randleiste 20 im Bereich ebenfalls eines Filtratadapters 14. Auch hier ist ein Filtratkanal 21 vorgesehen, der in den Innenbereich 22 der Randleiste 20 übergeht. Die Innenseite der Randleiste 20 weist ebenfalls U-förmige Ausnehmungen 23 auf, in welche die äußeren Kanten 24 der Einzelsegmente 2' der Keramikaußenlagen 2 eingesetzt werden können. Die Randleiste 20 kann ebenso wie die Verbindungselemente 11 mit den Kanten der Einzelsegmente verklebt oder auf sonstige Weise abgedichtet werden.

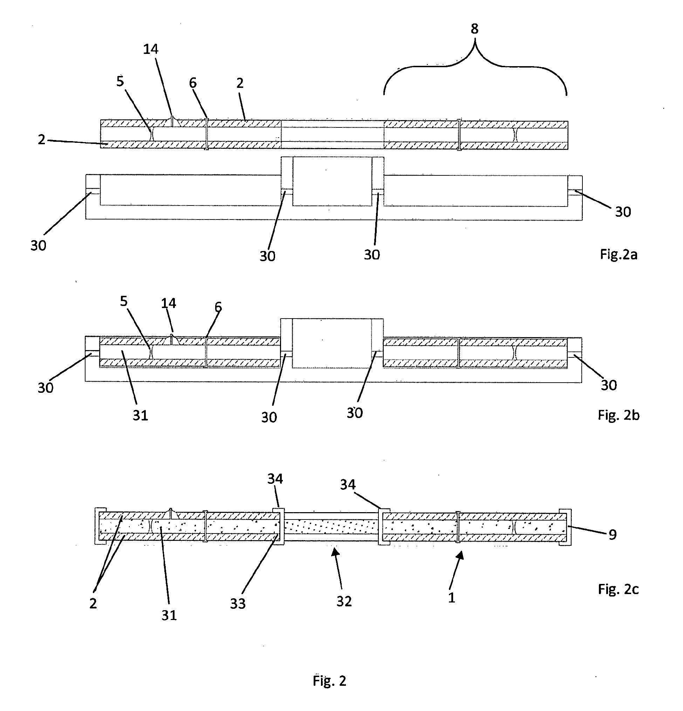

In Figur 2 ist noch schematisch eine Abfolge dargestellt, wie eine erfindungsgemäße Filtervorrichtung in alternativer Ausführungsform hergestellt werden kann. Figur 2a zeigt zunächst eine Form nach Art einer Kuchenform, in die ein vorbereitetes Packet von zwei Keramikaußenlage 2 eingelegt werden kann, die durch Fixierpunkte 5 und Zugbelastungselemente 6 aneinander befestigt sind. Außerdem ist noch ein Filtratadapter 14 zu sehen, der im Innenbereich 8 der oberen Keramikaußenlage 2 vorgesehen ist.

Der Innenraum zwischen den beiden Keramikaußenlage 2 ist noch nicht ausgefüllt. Figur 2b zeigt die Form, in der das Döppelpaket aus den verbundenen Keramikaußenlage 2 eingesetzt ist. Über Kanäle 30, die an den Innenraum 31 zwischen den beiden Keramikaußenlage 2 angrenzen, wird zur Bildung des Drainageelementes 3 ein Schaum eingespritzt, der sich im Innenbereich 31 verfestigt und dadurch die Keramikaußenlage 2 auch verbindet. Nach Verfestigung des Drainageelementes 3 zwischen den Keramikaußenlage 2 wird das so gebildete Sandwich der Filtervorrichtung 1 aus der Form genommen und randseitig durch Dichtelemente 9 abgedichtet. Hat die Filtervorrichtung 1 eine zentrale Öffnung 32, so muss auch der zur zentralen Öffnung hinweisende Randbereich 33 durch innere Randelemente 34 abgedichet werden.

Abschließend sei angemerkt, dass die Filtervorrichtung 1 mit ihren Keramikaußenlage 2 je nach Anwendungsbereich unterschiedliche Drainageelemente aufweisen kann, deren Durchfluss-Innenwiederstand an die jeweiligen Aufgaben angepasst werden kann. Auch die Keramiklagen können unterschiedliche Stärken aufweisen, ebenfalls abhängig vom Einsatzbereich der Filtervorrichtung 1. Die Filtervorrichtung 1 kann an unterschiedlichsten Stellen mit Drainageöffnungen, Rückspülöffnungen, Filtratzu- und Abflussöffnungen versehen sein. Hinsichtlich der randseitigen Dichtung können Steckleisten, Verklebungen, Gummidichtungen und dgl. eingesetzt werden.

Die Filtervorrichtung 1 kann rund, oder eckig, mit oder ohne zentrale Öffnung ausgebildet sein oder mehrschichtig zu einem Filterstack zusammengebaut sein.

### BEZUGSZEICHENLISTE

- 1: Filtervorrichtung
- 2: Keramikaußenlage
- 3: Drainageelement
- 4: Innenseite von 2
- 5: Fixierpunkt
- 6: Zugbelastungselementen
- 7: Randbereich
- 8: Innenbereich
- 9: Randabschlusselemente
- 10: Stoßkanten
- 11: Verbindungselement
- 12: Ausnehmungen

- 14: Adapter
- 15: Kanalabschnitt
- 16: Innenbereich

- 20: Randleiste
- 21: Filtratkanal
- 22: Innenbereich
- 23: Ausnehmung

- 30: Kanäle
- 31: Innenraum
- 32: Öffnung
- 33: Randbereich
- 34: Randelement

## Patentansprüche

1. Platten- oder scheibenartige Filtervorrichtung (1), umfassend wenigstens zwei gesinterte Keramikaußenlagen (2), die zwischen sich wenigstens ein Drainageelement (3) einschließen und zumindest bereichsweise unmittelbar oder mittelbar miteinander verbunden sind,
**dadurch gekennzeichnet, dass**
die gesinterten Keramikaußenlagen (2) an ihrer dem Drainageelement (3) zugeordneten Innenseite (4) eben ausgebildet sind und das Drainageelement (3) damit i. w. flächig beaufschlagen sowie das Drainageelement (3) aus nicht keramischem Material besteht.

2. Vorrichtung nach Anspruch 1,
**dadurch gekennzeichnet, dass**
die Keramikaußenlagen (2) randseitig miteinander verbunden, insbesondere miteinander verklebt sind.

3. Vorrichtung nach einem der vorhergehenden Ansprüche,
**dadurch gekennzeichnet, dass**
die randseitige Verbindung der Keramikaußenlagen (2) unter Zwischenlage wenigstens eines Abschlusselementes (9) oder unter der Verwendung einer Vergussmasse erfolgt.

4. Vorrichtung nach einem der vorhergehenden Ansprüche,
**dadurch gekennzeichnet, dass**
das Drainageelement (3) aus einem textilen, polymeren oder metallischen Material besteht oder aus Carbon, Papier oder Zellstoff gebildet ist.

5. Vorrichtung nach einem der vorhergehenden Ansprüche,
**dadurch gekennzeichnet, dass**
das Drainageelement (3) ein Gewebe oder ein Gelege ist.

6. Vorrichtung nach einem der vorhergehenden Ansprüche,
**dadurch gekennzeichnet, dass**
das Drainageelement (3) aus glasartigem Material besteht.

7. Vorrichtung nach Anspruch 6,
**dadurch gekennzeichnet, dass**
das glasartige Material faserig ausgebildet ist.

8. Vorrichtung nach einem der vorhergehenden Ansprüche,
**dadurch gekennzeichnet, dass**
dass Drainageelement (3) aus einem Kunststoffschaum, Metallschaum oder metallischem Gitterelement besteht.

9. Vorrichtung nach einem der vorhergehenden Ansprüche,
**dadurch gekennzeichnet, dass**
die Keramikaußenlagen (2) durch Fixier- oder Unterstützungspunkte (5) aus Polymer- oder Keramikklebesystemen miteinander verbunden sind.

10. Vorrichtung nach einem der vorhergehenden Ansprüche,
**dadurch gekennzeichnet, dass**
die Keramikaußenlagen (2) in ihrem Innenbereich (8) von Zugbelastungsverbindungselementen (6) durchsetzt und/oder durch solche aneinander befestigt sind.

11. Vorrichtung nach einem der vorhergehenden Ansprüche,
**dadurch gekennzeichnet, dass**
die Keramikaußenlagen (2) als runde Kreisscheiben ausgebildet sind.

12. Vorrichtung nach einem der vorhergehenden Ansprüche,
**dadurch gekennzeichnet, dass**
die Keramikaußenlagen (2) aus einer Mehrzahl von Einzelsegmenten (2') oder Einzelelementen zusammengesetzt sind und an ihren Stoßkanten (10) über Verbindungselemente (11) miteinander verbunden sind.

13. Vorrichtung nach einem der vorhergehenden Ansprüche,
**dadurch gekennzeichnet, dass**
im Innenbereich (8) wenigstens einer Keramikaußenlage (2) eine Filtratabflussoder Zuflussöffnung angeordnet ist.

14. Vorrichtung nach einem der vorhergehenden Ansprüche,
**dadurch gekennzeichnet, dass**
an wenigstens einer Außenseite der Keramikaußenlagen (2) Filtratabfluss- oder Zuflussadapter angeformt oder ansetzbar sind.

15. Vorrichtung nach Anspruch 12,
**dadurch gekennzeichnet, dass**
Filtratabfluss- oder Zuflussadapter (14) im Bereich der StoßkantenVerbindungselemente (11) angeordnet sind.

16. Vorrichtung nach einem der vorhergehenden Ansprüche,
**dadurch gekennzeichnet, dass**
eine Mehrzahl von Filtereinrichtungen zu einem Plattenpäket zusammengefügt in einem Filtergehäuse angeordnet sind.
